# EUROPEAN PATENT SPECIFICATION

(11) **EP 3 795 293 B1**
(45) Date of publication and mention of the grant of the patent: **13.12.2023**
(21) Application number: 20190088.3
(22) Date of filing: 07.08.2020
(51) Int. Cl.: B23Q 3/08, B23Q 16/00

(54) **POSITIONING AND BLOCKING DEVICE FOR POSITIONING AND BLOCKING WORKPIECES WITH RESPECT TO A WORKING TABLE**
POSITIONIER UND SPANNVORRICHTUNG ZUM POSITIONIEREN UND HALTEN VON WERKSTÜCKEN AUF EINEM ARBEITSTISCH
DISPOSITIF DE POSITIONNEMENT ET BLOCAGE POUR POSITIONNER ET BLOQUER UNE PIECE SUR UNE TABLE DE TRAVAIL

(30) Priority: 23.09.2019 IT 201900016991
(43) Date of publication of application: 24.03.2021
(73) Proprietor: SCM Group S.p.A., 47921 Rimini (RN) (IT)
(72) Inventor: GABRIELLI, Mirko, 47921 RIMINI (RN) (IT); SERAFINI, Fabrizio, 47921 RIMINI (RN) (IT)
(74) Representative: Tiburzi, Andrea

(56) References cited:
- EP-A1- 2 682 226
- EP-A2- 0 533 083
- WO-A1-96/33049
- FR-A1- 2 706 798
- US-B1- 6 302 387

## Description

The present invention refers to an improved positioning and blocking device for positioning and blocking pieces with respect to a working table.

More specifically, the invention relates to the structure of a positioning and blocking device to be installed on a working table for machining a piece, such as a panel, configured to correctly position said piece on the device itself (and consequently also with respect to to the working table) and block said piece for its processing.

In other words, the positioning and blocking device constitutes a spatial reference to correctly position the piece with respect to the working table and subsequently allows the piece to be blocked in the correct position for the time necessary for its machining.

### Prior art

Currently, in a center for processing parts, such as panels, there is a working table.

In general, this working table can be of two types.

A first type of working table called a "bar working table", which is supported by a base and comprises a plurality of bars to support the workpieces, parallel to each other and movable along said base.

On each bar, one or more supporting and blocking devices or respective gripping means can be positioned to clamp the panel to be machined.

Said working table is mainly used for through processing (i.e. cutting the panel into parts or drilling through holes on the panel and then working the edge of the panel).

A further type of working table called a "multifunctional working table", which is supported by a base and comprises:
- fixing means for fixing the piece to be worked on said working table, and
- a plurality of abutment elements for the piece, so that the piece to be machined is positioned correctly with respect to the working table, each of which is movable between a rest position, in which it is inside the working table (i.e. in a lowered position with respect to the working table), and an operational position, in which it projects with respect to the working table (i.e. in a raised position with respect to the working table), in such a way that the panel contacts said abutment elements.

In general, said fixing means comprise:
i. a plurality of holes which, by means of a chamber or respective ducts, are connected to a depression generating device, such as a vacuum pump,
ii. one or more gaskets, manually positioned by an operator in correspondence with the area of the piece to be machined,
iii. a plurality of grooves for the insertion of said gaskets in order to guarantee the sealing of the depression generating by the vacuum pump.

This working table is mainly used for non-through machining (i.e. removing portions of a panel surface, without the panel being cut into parts or through holes are made on the panel).

However, in case of it is necessary to carry out through processing, or if the processing concerns at least one side edge of the panel or the lower face of the panel, one or more support and locking devices of a known type are arranged and fixed on the worktop multifunction and the piece is positioned and blocked with respect to said multifunction working table by means of said supporting and blocking devices.

The number and position of said supporting and blocking devices with respect to the multifunction working table are determined on the basis of the dimensions of the piece to be machined, and the type of processing, which the piece is subjected to.

A first example of a known type of supporting and blocking device comprises:
- a body, comprising:
   o a base comprising gripping means for engaging with the working table and an opening to allow the connection to said depression generating device,
   o a head comprising blocking means for blocking the workpiece.

Said known type of supporting and blocking device has a duct within, which extends from the opening, provided on the base, to the head to allow, when the supporting and blocking device and connected to said device, to generate a depression and the latter is active, the creation of a depression inside said duct.

If the depression generating device is a vacuum pump, the air sucked in by the vacuum pump allows the blocking means to block the workpiece to the head of the supporting and blocking device.

The supporting and blocking device is fixed on the worktop in such a way that its opening (provided on the base) is in correspondence with a hole on the worktop and is connected, by means of a chamber or another duct, to said vacuum pump .

Each supporting and blocking device is necessarily arranged close to a respective abutment element of the working table, and therefore it is possible to know the position of the piece to be machined with respect to the working table.

In order to guarantee the abutment of the piece to be machined with the abutment element, said abutment element must have a height such that, in the operative position, it allows the abutment of the workpiece.

Consequently, either an abutment element is provided having a predetermined height or it is necessary to couple/connect a suitable element to the abutment element, so that the latter has a height such as to allow the abutment of the workpiece (arranged on the supporting and blocking device) with the abutment element itself.

There are a limited number of abutment elements on the multifunction working table.

A disadvantage due to the use of such known supporting and blocking devices is that it is not possible to position any number of said supporting and blocking devices with respect to a multifunction working table, since the number of abutment elements on the working table is limited and therefore it is not possible to always guarantee a perfect seal of the workpiece.

A second disadvantage is given by the need to guarantee the abutment of the workpiece to be machined with the abutment element, also by adding an element to be coupled/connected to the abutment element, so that the latter has an adequate height.

A further disadvantage is given by the fact that, from a practical point of view, the operator must carefully manually position the supporting and blocking devices of the known type on the multifunction working table, close to the abutment elements provided in the multifunction working table, with a consequent waste of time, which negatively affects the processing times.

A second example of a known type of supporting and blocking device, differently from the first example of a supporting and blocking device described above, is equipped with its own abutment element (connected to the body of the supporting and blocking device), so that said device itself is a spatial reference for the piece to be machined with respect to the working table.

In particular, said known supporting and blocking device comprises:
- a body comprising:
   o a base comprising gripping means for engaging with the working table and an opening to allow connection to a depression generating device,
   o a head comprising locking means for blocking the workpiece,
- an abutment element,
- moving means for moving said abutment element between a rest position, in which said abutment element is in a lowered position with respect to said head, and an operational position, in which said abutment element is in a raised position with respect to said head, to allow the piece to be worked to abut with said abutment element.

As described for the first example of the known supporting and blocking device, also said second example of known supporting and blocking device has a duct, which extends from the opening provided on the base to the head to allow the creation of a depression inside said duct, when the supporting and blocking device is connected to said depression generating device and the latter is active.

In addition, for said moving means to be operative, it is necessary that said moving means are connected to a specific power supplying device to supply said moving means.

If said moving means are pneumatic moving means, a pneumatic type supply device is required and if said moving means are electric moving means, an electric type supply device is required.

If the power supply device is of the pneumatic type, said supply device can comprise a pneumatic unit configured to emit an air jet.

If the power supply device is of the electrical type, said power supply device can comprise an electrical apparatus for transmitting an electric current signal.

Regardless of the type of supply device, the presence of connection means is required to connect the supply device to the aforementioned moving means.

In case of a pneumatic type supply device, said connection means comprise one or more ducts.

In case of an electrical power supply device, said connection means comprise one or more electrical cables.

A disadvantage of said known type of supporting and blocking device is the need to provide a specific supply device for said moving means.

A second disadvantage is given by the necessary presence of connection means for connecting said supply device to said moving means.

Consequently, said supporting and blocking device has a significant encumbrance, due to the necessary presence of the supply device and of the connection means for connecting said supply device to the moving means.

A further disadvantage is the need for periodic maintenance, with the related costs.

FR 2 706 798 A1 discloses a device according to the preamble of claim 1.

### Scope of the invention

The object of the present invention is to overcome said disadvantages by providing a positioning and blocking device for positioning and blocking a piece, such as a panel, with respect to a working table, in which the positioning and blocking device is equipped with an own abutment element and respective moving means for moving said abutment element and the structure of said positioning and blocking device is designed to significantly limit the overall dimensions, avoiding that said device is connected to a specific suppluy device for powering said moving means.

### Object of the invention

The invention is defined in claim 1.

In particular, said positioning and blocking device may comprise a chamber to receive at least partially said abutment element, and said second duct may connect said chamber to said first duct.

According to the invention, said positioning and blocking device is provided with a check valve, arranged on said head at said second opening, to prevent or allow the passage of a fluid from said first duct to said second duct and/or from said first duct to the external environment.

With reference to the blocking means, said blocking means may comprise at least a gasket, so that, when said piece is arranged on said head, a compartment is created between said head and said piece.

With reference to the positioning and blocking device, said body may comprise a base.

Said first opening may be arranged on said base and said first duct may extend inside said body, between said base and said head.

Advantageously, said base may be provided with coupling means to be coupled to said working table in such a way that said first opening is positioned at a hole arranged on said working table, where said hole is connected to said depression generating device.

Said coupling means may comprise at least a further gasket, so that, when said positioning and blocking device is arranged on said working table, a further compartment is created between said working table and said base.

Further said positioning and blocking device may comprise moving means for moving said abutment element from said rest position to said operational position

Said moving means preferably comprise at least one spring.

The present invention relates also to a method for positioning and blocking a piece on at least a positioning and blocking device.

Said method comprises the following steps:
A) providing at least a positioning and blocking device according to any one of the previous claims;
B) arranging said positioning and blocking device on a working table in such a way that the first opening of said positioning and blocking device is connected to a depression generating device for generating a depression;
C) activating said depression generating device;
D) positioning said piece on the head of said positioning and blocking device in such a way that said piece contacts the abutment element of said positioning and blocking device, where said abutment element is in operational position;
E) activating said positioning and blocking device in such a way that the depression generated by said depression generating device reaches said first duct, through said first opening, said blocking means assume said second condition and that said abutment element moves from the operational position to the rest position.

In particular, the step B may comprise the sub-step of arranging said positioning and blocking device at a hole of said working table, where said hole is connected to said depression generating device.

Further, the step E may comprise the following sub-step:
- exerting a pressure on said head through said piece in such a way that the check valve, arranged on the head of the positioning and blocking device allows the passage of a fluid from said first duct to said second duct and/or from said first duct to the external environment.

The present invention also refers to a machine tool for working a piece.

Said machine tool comprises:
- a basement,
- a working table for supporting said piece, arranged on said basement,
- a depression generating device,
- a working unit for working said piece, movable with respect to said working table along a first axis, where said working unit comprises an operational head, where said operational head is movable along a second axis, perpendicular to said first axis, and along a third axis, perpendicular to said first axis and said second axis.

Further, said machine tool comprises a positioning and blocking device as mentioned above.

The working table of said machine tool may comprise at least one hole, and in that said depression generating device is connected to said at least one hole.

### List of figures

The present invention will be now described, for illustrative but not limitative purposes, according to its preferred embodiments, with particular reference to the figures of the enclosed drawings, wherein:
figure 1 is a perspective view of a positioning and blocking device, according to the present invention, arranged on a working table, in particular a multifunction working table, in which said positioning and blocking device is equipped with an abutment element and the latter is in an operational position;
figure 2 is a first sectional side view showing the positioning and blocking device, on which the panel is positioned, without the latter being in abutment with the abutment element of the positioning and blocking device in the operational position;
figure 3 is a second sectional side view showing the positioning and blocking device, on which the panel is positioned, which abuts with the abutment element of the positioning and blocking device in the operational position;
figure 4 is a third sectional side view showing the positioning and blocking device, on which the panel is positioned, in which the panel is locked in position and the abutment element of the positioning and blocking device is in the rest position; and
figure 5 is a schematic view of a machine tool comprising a working table and a machining unit for machining panels, and shows some positioning and blocking devices arranged on the working table which lock a panel to be machined.

In the various figures, similar parts will be indicated by the same reference numbers.

### Detailed description of the invention

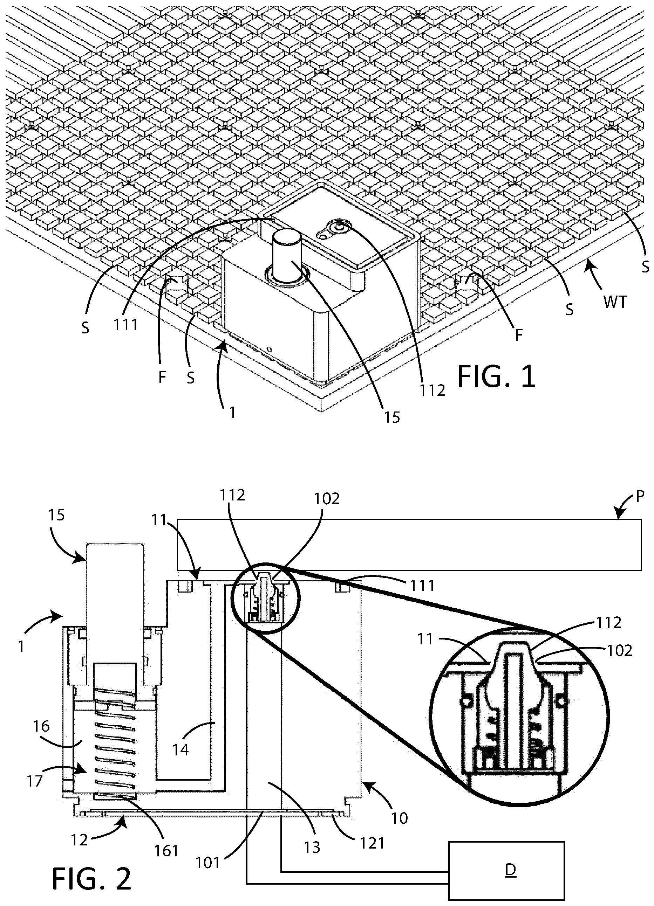

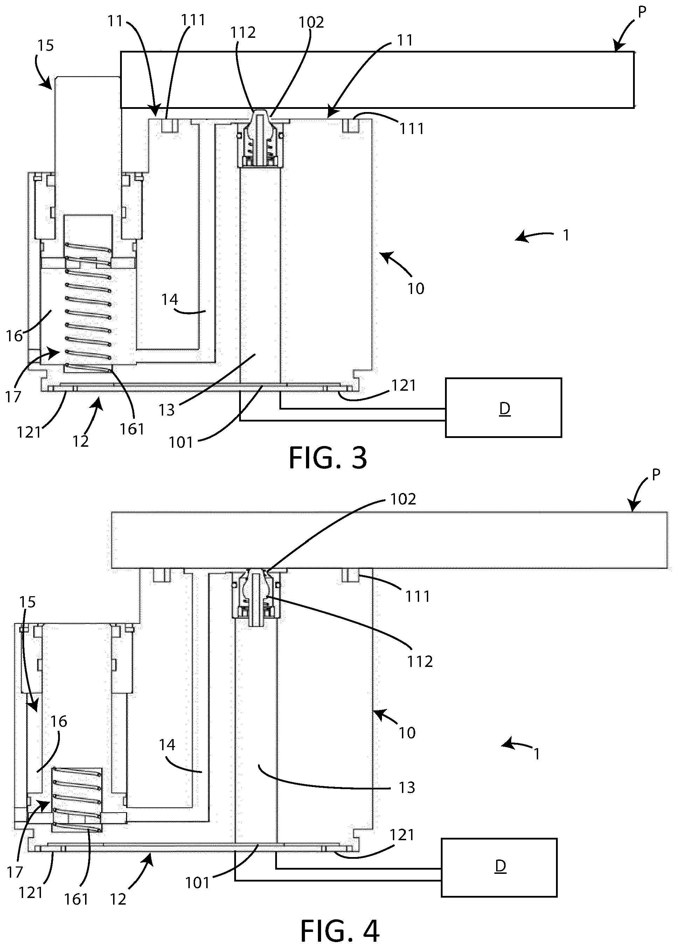

With particular reference to figures 1-4, a positioning and blocking device is described for positioning and blocking a piece P to be machined with respect to a working table WT.

In the example described, said piece P is a panel, such as a wooden panel.

However, said piece P can be made of metal or glass or plastic or any other material, without departing from the scope of the invention.

In particular, said positioning and blocking device 1 comprises:
- a body 10 comprising a head 11,
- blocking means 111 for blocking said piece P, arranged on said head 11 and configured to assume a first condition, in which said blocking means 111 do not block said piece P, and a second condition, in which said blocking means 111 block said piece P,
- a first opening 101 provided in said body 10 configured to be connected, when the positioning and blocking device 1 is in use, to a depression generating device D to generate a depression,
- a second opening 102 arranged on said head 11,
- a first duct 13, which extends between said first opening 101 and said second opening 102;
- an abutment element 15, movable between a rest position, in which said abutment element 15 is in a lowered position with respect to said body 10 (i.e. the abutment element 15 does not protrude with respect to the head 11), and a operational position, in which said abutment element 15 is in a raised position with respect to said body 10 (i.e. the abutment element 15 protrudes with respect to the head 11), so that said abutment element 15 is a spatial reference for said piece P with respect to to said positioning and blocking device 1.

In particular, said positioning and blocking device 1 comprises:
- a second conduit 14, which connects said abutment element 15 to said first conduit 13.

Said positioning and blocking device 1 is configured in such a way that, when said depression generating device D generates a depression in said first duct 13, through said first opening 101, said blocking means 111 assume said second condition and said safety abutment element 15 from the operational position to the rest position.

In particular, said second conduit 14 connects said abutment element 15 to said first conduit 13, in such a way that, when said blocking means 111 assume said second condition (i.e. when said blocking means 111 block the workpiece P), said second duct 14 is in communication with said first duct 13.

In the embodiment described, said positioning and blocking device 1 comprises a chamber 16 to at least partially receive said abutment element 15.

Furthermore, said second conduit 14 connects said chamber 16 to said first conduit 13.

When the depression generating device D is connected to the first opening 101 of the positioning and blocking device 1 and it is switched on, a vacuum is generated in the first duct 13 and said blocking means assume the second condition, so that a space is created between the piece P and the head 11 of the positioning and blocking device 1, and this space allows the passage of said depression from said first duct 13 to said second duct 14, so that the abutment element 15 moves with respect to the head 11 and assume the rest position.

Furthermore, the body 10 of said positioning and blocking device 1 comprises a base 12 configured to be coupled to said working table WT.

The working table WT is equipped with one or more holes F, each of which is connected to said vacuum generating device D.

With reference to the head 11 of the positioning and blocking device 1, said blocking means 111 comprise one or more gaskets, so that, when said piece P is arranged on said head 11, a space is created between said head 11 and said piece P.

In the embodiment described, said blocking means 111 comprise a single gasket arranged along the perimeter of the head 11.

However, it is not necessary that said gasket is arranged along the perimeter of said head, but it is sufficient that it is arranged on the head 11.

Furthermore, a check valve 112 is arranged on said head 11 in correspondence with said second opening 102, to prevent or to allow (based on the value of the pressure exerted on said check valve) the passage of a fluid (i.e. air in the embodiment described) from said first duct 13 to said second duct 14 and/or from said first duct 13 to the external environment.

In the embodiment described, the first opening 101 is arranged on said base 12 and said first duct 13 extends inside said body 10, between said base 12 and said head 11.

Said base 12 is equipped with coupling means 121 to be coupled to said working table WT in such a way that said first opening 101 is positioned in correspondence with one of said holes F, arranged on said working table WT.

In particular, said coupling means 121 comprise one or more further gaskets shaped to be housed within the grooves S arranged on the working table WT, so that, when said positioning and blocking device 1 is arranged on said working table WT, a further space is created between said working table WT and said base 12.

With particular reference to the abutment element 15, as already said, said abutment element 15 represents a spatial reference for the piece P to be machined with respect to the positioning and blocking device itself and consequently also with respect to the working table WT.

The fact that said abutment element 15 is movable with respect to the body 10 of the positioning and blocking device 1, allows the piece P to be machined to be positioned on the head 11 of the positioning device itself (the abutment element 15 is in the operational position and the piece P abuts with said abutment element 15) and then blocked by means of said blocking means 111, without the piece P abutting against said abutment element 15 (the abutment element 15 is in the rest position and the piece P no longer abuts with said abutment element 15).

In order to move said abutment element 15 between said rest position to said operational position, the positioning and blocking device 1 comprises moving means 17.

Said moving means comprise at least one spring.

In particular, in the embodiment described, said chamber 16 comprises a bottom wall 161, and said moving means 17 comprise at least one spring, which connects said abutment element 15 to said bottom wall 161.

In the embodiment described, said depression generating device is a vacuum pump.

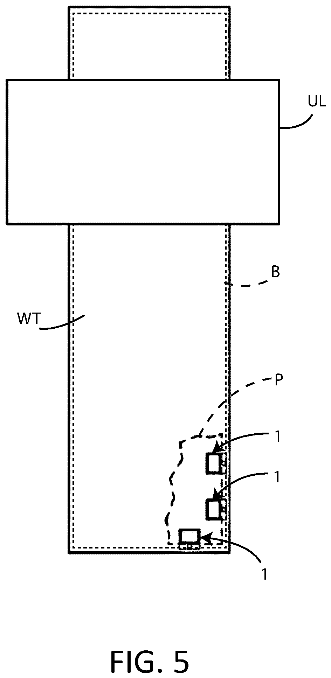

Figure 5 is a schematic view of a machine tool M for machining pieces P, which, in the example described, are panels.

Said machine tool M comprises said working table WT and a machining unit UL, for processing said panels.

Some positioning and blocking devices are arranged on said working table WT and block a panel to be machined.

Said machine tool M comprises:
- a base B,
- a working table WT (as already mentioned) to support said piece P, arranged on said base B,
- a depression generating device D,
- a working unit UL, for machining said piece P, movable with respect to said working plane WT along a first axis X,
- at least one positioning and blocking device 1 described above, arranged on said working table WT.

With particular reference to the processing unit UL, said processing unit UL comprises an operational head (not shown) for machining the panel, movable along a second axis Y, perpendicular to said first axis X, and along a third axis Z, perpendicular to said first axis X and said second axis Y.

One or more tools (for machining the panel) are removably coupled to the operating head.

As can be seen from figure 5, a plurality of positioning and blocking devices are arranged on the working table WT.

The number and position of positioning and blocking devices 1 are chosen on the basis of the dimensions of the panel to be machined and the type of machining, which the panel is subjected to.

As mentioned, each positioning and blocking device 1 is arranged on the working table WT, in such a way that the respective first opening 101 is positioned in correspondence with a respective hole F of the working table WT, each of which is connected to the depression generating device D.

However, although not shown, the working table WT can be devoid of holes and the positioning and blocking device 1 (arranged on the working table WT) can be connected to the depression generating device D through a further duct.

The respective additional gaskets are housed in the grooves S provided on the working table WT.

Once said positioning and blocking devices 1 are arranged by an operator on the working table WT, it is possible to turn on the depression generating device D.

The depression generated by said depression generating device D not only allows the blocking of the panel to be machined (causing the movement of the abutment element from its operational position to its rest position) and, regardless the blocking of said panel, allows also the blocking of the base 12 of the positioning and blocking device 1 on the working table WT, by means of the coupling means 121, which said base 12 is provided with.

After activating the depression generating device D, the operator positions the positioning and blocking devices 1 on the working table WT, which are blocked on said working table WT by means of said coupling means 121 arranged on said base 12, thanks to the vacuum condition created by said depression generating device D between said base 12 and said working table WT.

Subsequently, the operator positions the panel P on the head 11 of one or more positioning and blocking devices, in such a way that the panel contacts the respective abutment element 15 in the operational position (i.e. a raised position with respect to said head), so that the panel P is correctly positioned with respect to the positioning and blocking devices 1 and therefore also with respect to the working table WT for the panel processing.

To block the panel on the head 11 of the positioning and blocking devices, the operator exerts a pressure on a first surface of the panel P (i.e. the upper surface) so that the check valve 112 allows the passage of a fluid (i.e. air in the embodiment described).

A vacuum is generated between the second surface or lower surface of the panel and the head 11 of the respective positioning and blocking devices 1 and the panel is blocked to be machined by the processing unit UL.

The pressure exerted by the operator on the panel P, and the consequent opening of the check valve 112, also allow the propagation of the depression from said first duct 13 to said second duct 14, causing the movement of the respective abutment element 15 from the operational position to the rest position.

At this point the panel can be processed by the machining unit UL.

Once the processing of the panel P has been completed, the operator turns off the depression generating device D, so that the vacuum condition between the head 11 of the respective positioning and blocking devices 1 and the panel P is no longer present.

At this point the moving means 17 allow the abutment element 15 to pass from the rest position to the operational position.

The present invention also refers to a method for positioning and blocking a workpiece P on at least one positioning and blocking device 1.

In particular, the present invention relates to a method for positioning and blocking a workpiece P on at least one positioning and blocking device 1, arranged on a working table WT of the aforementioned machine tool M.

This method includes the following steps:
A) providing at least one positioning and blocking device 1;
B) arranging said positioning and blocking device on a working table WT, in such a way that the first opening 101 of said positioning and blocking device is connected to a depression generating device D;
C) activating said depression generating device D;
D) positioning said workpiece P on the head 11 of said positioning and blocking device 1, in such a way that said piece P contacts the abutment element 15 of said positioning and blocking device, where said abutment element 15 is in the operational position;
E) activating said positioning and blocking device 1, in such a way that the depression generated by said pressure generating device D reaches said first duct 13, through said first opening 101, and said blocking means 111 assumes said second condition and that said stop element 15 passes from the operational position to the rest position.

With particular reference to the step B, such step B can comprise the sub-step of arranging said positioning and blocking device 1 in correspondence with a hole F of said working table WT, where said hole F is connected to said depression generating device D.

In particular, the step E of the method includes the following sub-step:
- exerting a pressure on the head 11 of the positioning and blocking device 1 through said piece P, in such a way that a check valve 112, arranged on the head 11 of the positioning and blocking device 1, allows the passage of a fluid from said first duct 13 to said second duct 14 and from said first duct 13 to the external environment.

### Advantages

Advantageously, as already mentioned, the support and locking device, object of the present invention, allows to correctly position the piece to be machined on the device itself and consequently with respect to the working table for its processing.

A further advantage is given by the fact that said support and blocking device is able to move the abutment element from its operational position to its rest position and to block said workpiece by connecting to a single depression generating device D.

As described, in the case of the depression generating device (connected to the support and blocking device) is a vacuum pump, the structure of the device, differently from the known technical solutions, is designed in such a way that the air sucked allows the workpiece to be locked and the abutment element to move towards its rest position.

## Claims

1. Positioning and blocking device (1) for positioning and blocking a piece (P) with respect to a working table (WT), comprising:
- a body (10) comprises a head (11),
- blocking means (111) for blocking said piece (P), arranged on said head (11) and configured to assume a first condition, where said blocking means (111) does not block said piece (P), and a second condition, where said blocking means (111) block said piece (P),
- a first opening (101) provided in said body (10) and configured to be connected, when the positioning and blocking device (1) is in use, to a depression generating device (D) for generating a depression,
- a second opening (102) arranged on said head (11),
- a first duct (13) extending between said first opening (101) and said second opening (102),
- an abutment element (15), movable between a rest position and an operational position,
wherein said positioning and blocking device (1) comprises a second duct (14), connected to said abutment element (15), and
said positioning and blocking device (1) is configured in such a way that, when said depression generating device (D) generates a depression in said first duct (13) through said first opening (101), said blocking means (111) assume said second condition and said abutment element (15) moves from the operational position to the rest position,
**characterized in that**
said second duct (14) connects said abutment element (15) to said first duct (13) in such a way that, when said blocking means (111) assume said second condition, said second duct (14) is in communication with said first duct (13),
**in that**
said positioning and blocking device (1) is provided with a check valve (112), arranged on said head (11) at said second opening (102), to prevent or allow the passage of a fluid from said first duct (13) to said second duct (14) and/or from said first duct (13) to the external environment.

2. Positioning and blocking device (1) according to the previous claim, **characterized in that**
said positioning and blocking device (1) comprises a chamber (16) to receive at least partially said abutment element (15),
**in that**
said second duct (14) connects said chamber (16) to said first duct (13).

3. Positioning and blocking device (1) according to any one of the previous claims, **characterized in that** said blocking means comprise at least a gasket, so that, when said piece (P) is arranged on said head (11), a compartment is created between said head (11) and said piece (P).

4. Positioning and blocking device (1) according to any one of the previous claims, **characterized in that**
the body (10) of said positioning and blocking device (1) comprises a base (12) and said first opening (101) is arranged on said base (12),
**in that**
said first duct (13) extends inside said body (10), between said base (12) and said head (11).

5. Positioning and blocking device (1) according to the previous claim **characterized in that** said base (12) is provided with coupling means (121) to be coupled to said working table (WT) in such a way that said first opening (101) is positioned at a hole (F) arranged on said working table (WT), where said hole (F) is connected to said depression generating device (D).

6. Positioning and blocking device (1) according to the previous claim, **characterized in that** said coupling means (121) comprises at least a further gasket, so that, when said positioning and blocking device (1) is arranged on said working table (WT), a further compartment is created between said working table (WT) and said base (12).

7. Positioning and blocking device (1) according to any one of the previous claims, **characterized in that** said positioning and blocking device (1) comprises moving means (17) for moving said abutment element (15) from said rest position to said operational position, said moving means (17) preferably comprising at least one spring.

8. Method for positioning and blocking a piece (P) on at least a positioning and blocking device (1), where said method comprises the following steps:
A) providing at least a positioning and blocking device (1) according to any one of the previous claims;
B) arranging said positioning and blocking device (1) on a working table (WT) in such a way that the first opening (101) of said positioning and blocking device (1) is connected to a depression generating device (D) for generating a depression;
C) activating said depression generating device (D);
D) positioning said piece (P) on the head (11) of said positioning and blocking device (1) in such a way that said piece (P) contacts the abutment element (15) of said positioning and blocking device (1), where said abutment element (15) is in operational position;
E) activating said positioning and blocking device (1) in such a way that the depression generated by said depression generating device (D) reaches said first duct (13), through said first opening (101), said blocking means (111) assume said second condition and that said abutment element (15) moves from the operational position to the rest position.

9. Method according to the previous claim, **characterized in that** the step B comprises the sub-step of arranging said positioning and blocking device (1) at a hole (F) of said working table (WT), where said hole (F) is connected to said depression generating device (D).

10. Method according to claim 8 or 9, **characterized in that** the step E comprises the following sub-step:
- exerting a pressure on said head (11) through said piece (P) in such a way that the check valve (112), arranged on the head (11) of the positioning and blocking device (1) allows the passage of a fluid from said first duct (13) to said second duct (14) and/or from said first duct (13) to the external environment.

11. Machine tool (M) for working a piece (P), comprising:
- a basement (B),
- a working table (WT) for supporting said piece (P), arranged on said basement (B),
- a depression generating device (D),
- a working unit (UL) for working said piece (P), movable with respect to said working table (WT) along a first axis (X), where said working unit (UL) comprises an operational head, where said operational head is movable along a second axis (Y), perpendicular to said first axis (X), and along a third axis (Z), perpendicular to said first axis (X) and said second axis (Y),
**characterized in that**
said machine tool (M) comprises a positioning and blocking device according to any one of the claims 1-7.

12. Machine tool (M) according to the previous claim, **characterized in that** said working table (WT) comprises at least one hole (F), and **in that** said depression generating device (D) is connected to said at least one hole (F).

## Patentansprüche

1. Positionier- und Blockiervorrichtung (1) zum Positionieren und Blockieren eines Werkstücks (P) in Bezug auf einen Arbeitstisch (WT), umfassend:
- einen Körper (10), dieser umfasst einen Kopf (11),
- Blockiermittel (111) zum Blockieren des besagten Stücks (P), die an dem besagten Kopf (11) angeordnet und so konfiguriert sind, dass sie einen ersten Zustand einnehmen, in dem das besagte Blockiermittel (111) das Stück (P) nicht blockiert, und einen zweiten Zustand einnehmen, in dem das Blockiermittel (111) das besagte Stück (P) blockiert,
- eine erste Öffnung (101), die in dem besagten Körper (10) vorgesehen und so konfiguriert ist, dass sie, wenn die Positionierungs- und Blockiervorrichtung (1) in Gebrauch ist, mit einer Vorrichtung (D) zum Erzeugen eines Unterdrucks verbunden werden kann,
- eine zweite Öffnung (102), die an dem Kopf (11) angeordnet ist,
- einen ersten Kanal (13), der sich zwischen der ersten Öffnung (101) und der zweiten Öffnung (102) erstreckt,
- ein Anschlagelement (15), das zwischen einer Ruheposition und einer Betriebsposition beweglich ist, wobei die besagte Positionier- und Blockiervorrichtung (1) einen zweiten Kanal (14) umfasst, der mit dem besagten Anschlagelement (15) verbunden ist, und die besagte Positionier- und Blockiervorrichtung (1) so konfiguriert ist, dass, wenn die besagte Unterdruckerzeugungsvorrichtung (D) einen Unterdruck im besagten ersten Kanal (13) durch die besagte erste Öffnung (101) erzeugt, die besagten Blockiermittel (111) den besagten zweiten Zustand annehmen und das besagte Anschlagelement (15) sich von der Betriebsposition in die Ruheposition bewegt, **dadurch gekennzeichnet, dass** der besagte zweite Kanal (14) das besagte Anschlagelement (15) mit dem besagten ersten Kanal (13) so verbindet, dass, wenn die besagten Blockiermittel (111) den besagten zweiten Zustand einnehmen, der besagte zweite Kanal (14) mit dem besagten ersten Kanal (13) in Verbindung steht, und dadurch, dass die besagte Positionierungs- und Absperrvorrichtung (1) mit einem Rückschlagventil (112) versehen ist, das an dem besagten Kopf (11) an der besagten zweiten Öffnung (102) angeordnet ist, um den Durchgang eines Fluids vom besagten ersten Kanal (13) zum besagten zweiten Kanal (14) und/oder vom besagten ersten Kanal (13) zur äußeren Umgebung zu verhindern oder zu ermöglichen.

2. Positionier- und Blockiervorrichtung (1) nach dem vorhergehenden Anspruch, **dadurch gekennzeichnet, dass** die besagte Positionier- und Blockiervorrichtung (1) eine Kammer (16) umfasst, um zumindest teilweise das besagte Anschlagelement (15) aufzunehmen, und dadurch, dass der besagte zweite Kanal (14) die besagte Kammer (16) mit dem besagten ersten Kanal (13) verbindet.

3. Positionier- und Blockiervorrichtung (1) nach einem der vorhergehenden Ansprüche, **dadurch gekennzeichnet, dass** die besagten Blockiermittel mindestens eine Dichtung umfassen, so dass, wenn das besagte Stück (P) an dem besagten Kopf (11) angeordnet ist, ein Raum zwischen dem besagten Kopf (11) und dem besagten Stück (P) gebildet wird.

4. Positionier- und Blockiervorrichtung (1) nach einem der vorhergehenden Ansprüche, **dadurch gekennzeichnet, dass** der Körper (10) der besagten Positionierungs- und Blockierungsvorrichtung (1) eine Basis (12) umfasst, und die besagte erste Öffnung (101) an der besagten Basis (12) angeordnet ist, und dass sich der besagte erste Kanal (13) innerhalb des besagten Körpers (10) zwischen der besagten Basis (12) und dem besagten Kopf (11) erstreckt.

5. Positionier- und Blockiervorrichtung (1) nach dem vorhergehenden Anspruch, **dadurch gekennzeichnet, dass** die besagte Basis (12) mit Kopplungsmitteln (121) versehen ist, die mit dem besagten Arbeitstisch (WT) so zu koppeln sind, dass die besagte erste Öffnung (101) an einem Loch (F) positioniert ist, dass auf dem besagten Arbeitstisch (WT) angeordnet ist, wobei das besagte Loch (F) mit der besagten Unterdruckerzeugungsvorrichtung (D) verbunden ist.

6. Positionier- und Blockiervorrichtung (1) nach dem vorhergehenden Anspruch, **dadurch gekennzeichnet, dass** das besagte Kopplungsmittel (121) mindestens eine weitere Dichtung umfasst, so dass, wenn die besagte Positionier- und Blockiervorrichtung (1) auf dem besagten Arbeitstisch (WT) angeordnet ist, ein weiterer Raum zwischen dem besagten Arbeitstisch (WT) und der besagten Basis (12) geschaffen wird.

7. Positionier- und Blockiervorrichtung (1) nach einem der vorhergehenden Ansprüche, **dadurch gekennzeichnet, dass** die besagte Positionier- und Blockiervorrichtung (1) Bewegungsmittel (17) zum Bewegen des besagten Anschlagelements (15) von der besagten Ruheposition in die besagte Betriebsposition umfasst, wobei die besagten Bewegungsmittel (17) vorzugsweise mindestens eine Feder umfassen.

8. Verfahren zum Positionieren und Blockieren eines Stücks (P) auf mindestens einer Positionier- und Blockiervorrichtung (1), wobei das besagte Verfahren die folgenden Schritte umfasst:
A) bereitstellen mindestens einer Positionier- und Blockiervorrichtung (1) nach einem der vorhergehenden Ansprüche;
B) anordnen der besagten Positionier- und Blockiervorrichtung (1) auf einem Arbeitstisch (WT) derart, dass die erste Öffnung (101) der besagten Positionier- und Blockiervorrichtung (1) mit einer Unterdruckerzeugungsvorrichtung (D) zur Erzeugung eines Unterdrucks verbunden ist;
C) aktivierung der besagten Unterdruckerzeugungsvorrichtung (D);
D) positionieren des besagten Stücks (P) am Kopf (11) der besagten Positionier- und Blockiervorrichtung (1) derart, dass das besagte Stück (P) das besagte Anschlagelement (15) der besagten Positionier- und Blockiervorrichtung (1) berührt, wobei sich das besagte Anschlagelement (15) in Betriebsstellung befindet;
E) aktivieren der besagten Positionierungs- und Blockiervorrichtung (1) derart, dass der von der besagten Unterdruckerzeugungsvorrichtung (D) erzeugte Unterdruck den besagten ersten Kanal (13) durch die besagte erste Öffnung (101) erreicht, die besagten Blockiermittel (111) den besagten zweiten Zustand einnehmen und sich das besagte Anschlagelement (15) von der Betriebsposition in die Ruheposition bewegt.

9. Verfahren nach dem vorhergehenden Anspruch, **dadurch gekennzeichnet, dass** der Schritt B den Teilschritt des Anordnens der besagten Positionier- und Blockiervorrichtung (1) an einem Loch (F) des besagten Arbeitstisches (WT) umfasst, wobei das besagte Loch (F) mit der besagten Unterdruckerzeugungsvorrichtung (D) verbunden ist.

10. Verfahren nach Anspruch 8 oder 9, **dadurch gekennzeichnet, dass** der schritt E den folgenden Teilschritt umfasst:
- ausüben eines Drucks auf den besagten Kopf (11) durch das besagte Stück (P) derart, dass das Rückschlagventil (112), das am Kopf (11) der Positionier- und Sperrvorrichtung (1) angeordnet ist, den Durchgang eines Fluids vom besagten ersten Kanal (13) zum besagten zweiten Kanal (14) und/oder vom besagten ersten Kanal (13) zur äußeren Umgebung ermöglicht.

11. Werkzeugmaschine (M) zur Bearbeitung eines Werkstücks (P), umfassend:
- einen Sockel (B),
- einen Arbeitstisch (WT) zum Tragen des besagten Werkstücks (P), der auf dem besagten Sockel (B) angeordnet ist,
- eine Vorrichtung zur Erzeugung von Unterdruck (D),
- eine Arbeitseinheit (UL) zum Bearbeiten des besagten Stücks (P), die in Bezug auf den besagten Arbeitstisch (WT) entlang einer ersten Achse (X) beweglich ist, wobei die besagte Arbeitseinheit (UL) einen Arbeitskopf umfasst, wobei der besagte Arbeitskopf entlang einer zweiten Achse (Y) beweglich ist, die senkrecht zu der besagten ersten Achse (X) verläuft, und entlang einer dritten Achse (Z) beweglich ist, die senkrecht zu der besagten ersten Achse (X) und der besagten zweiten Achse (Y) verläuft, **dadurch gekennzeichnet, dass** die besagte Werkzeugmaschine (M) eine Positionier- und Blockiervorrichtung nach einem der Ansprüche 1 bis 7 umfasst.

12. Werkzeugmaschine (M) nach dem vorhergehenden Anspruch, **dadurch gekennzeichnet, dass** der besagte Arbeitstisch (WT) mindestens ein Loch (F) aufweist, und dass die besagte Unterdruckerzeugungsvorrichtung (D) mit dem besagten mindestens einen Loch (F) verbunden ist.

## Revendications

1. Dispositif de positionnement et de blocage (1) pour positionner et bloquer une pièce (P) par rapport à une table de travail (WT), comprenant:
- un corps (10) comprenant une tête (11),
- des moyens de blocage (111) pour bloquer ladite pièce (P), disposés sur ladite tête (11) et configurés pour prendre un premier état, dans lequel lesdits moyens de blocage (111) ne bloquent pas ladite pièce (P), et un deuxième état, dans lequel lesdits moyens de blocage (111) bloquent ladite pièce (P),
- une première ouverture (101) ménagée dans ledit corps (10) et configurée pour être reliée, lorsque le dispositif de positionnement et de blocage (1) est en service, à un dispositif de génération de dépression (D) pour générer une dépression,
- une deuxième ouverture (102) disposée sur ladite tête (11),
- un premier conduit (13) s'étendant entre ladite première ouverture (101) et ladite deuxième ouverture (102),
- un élément de butée (15), mobile entre une position de repos et une position opérationnelle, dans lequel ledit dispositif de positionnement et de blocage (1) comprend un deuxième conduit (14), relié à l'élément de butée (15), et ledit dispositif de positionnement et de blocage (1) est configuré de telle sorte que, lorsque le dispositif de génération de dépression (D) génère une dépression dans le premier conduit (13) à travers la première ouverture (101), les moyens de blocage (111) prennent ledit deuxième état et l'élément de butée (15) passe de la position opérationnelle à la position de repos, **caractérisé en ce que** ledit deuxième conduit (14) relie ledit élément de butée (15) audit premier conduit (13) de telle sorte que, lorsque lesdits moyens de blocage (111) assument ledit deuxième état, ledit deuxième conduit (14) est en communication avec ledit premier conduit (13), **en ce que** ledit dispositif de positionnement et de blocage (1) est pourvu d'un clapet anti-retour (112), disposé sur ladite tête (11) au niveau de ladite deuxième ouverture (102), pour empêcher ou permettre le passage d'un fluide dudit premier conduit (13) vers ledit deuxième conduit (14) et/ou dudit premier conduit (13) vers le milieu extérieur.

2. Dispositif de positionnement et de blocage (1) selon la revendication précédente, **caractérisé en ce que** ledit dispositif de positionnement et de blocage (1) comprend une chambre (16) destinée à recevoir au moins partiellement ledit élément de butée (15), **en ce que** ledit deuxième conduit (14) relie ladite chambre (16) audit premier conduit (13).

3. Dispositif de positionnement et de blocage (1) selon l'une quelconque des revendications précédentes, **caractérisé en ce que** lesdits moyens de blocage comprennent au moins un joint, de sorte que, lorsque ladite pièce (P) est disposée sur ladite tête (11), un compartiment est créé entre ladite tête (11) et ladite pièce (P).

4. Dispositif de positionnement et de blocage (1) selon l'une quelconque des revendications précédentes, **caractérisé en ce que** le corps (10) dudit dispositif de positionnement et de blocage (1) comprend une base (12) et ladite première ouverture (101) est disposée sur ladite base (12), **en ce que** ledit premier conduit (13) s'étend à l'intérieur dudit corps (10), entre ladite base (12) et ladite tête (11).

5. Dispositif de positionnement et de blocage (1) selon la revendication précédente **caractérisé en ce que** ladite base (12) est pourvue de moyens de couplage (121) pour être couplée à ladite table de travail (WT) de telle sorte que ladite première ouverture (101) soit positionnée au niveau d'un trou (F) disposé sur ladite table de travail (WT), où ledit trou (F) est relié audit dispositif générateur de dépression (D).

6. Dispositif de positionnement et de blocage (1) selon la revendication précédente, **caractérisé en ce que** ledit moyen de couplage (121) comprend au moins un autre joint, de sorte que, lorsque ledit dispositif de positionnement et de blocage (1) est disposé sur ladite table de travail (WT), un autre compartiment est créé entre ladite table de travail (WT) et ladite base (12).

7. Dispositif de positionnement et de blocage (1) selon l'une quelconque des revendications précédentes, **caractérisé en ce que** ledit dispositif de positionnement et de blocage (1) comprend des moyens de déplacement (17) pour déplacer ledit élément de butée (15) de ladite position de repos à ladite position opérationnelle, lesdits moyens de déplacement (17) comprenant de préférence au moins un ressort.

8. Procédé de positionnement et de blocage d'une pièce (P) sur au moins un dispositif de positionnement et de blocage (1), ledit procédé comprenant les étapes suivantes:
A) fournir au moins un dispositif de positionnement et de blocage (1) selon l'une quelconque des revendications précédentes;
B) disposer ledit dispositif de positionnement et de blocage (1) sur une table de travail (WT) de telle sorte que la première ouverture (101) dudit dispositif de positionnement et de blocage (1) soit reliée à un dispositif de génération de dépression (D) pour générer une dépression;
C) activer ledit dispositif générateur de dépression (D) ;
D) positionner ladite pièce (P) sur la tête (11) dudit dispositif de positionnement et de blocage (1) de manière à ce que ladite pièce (P) entre en contact avec l'élément de butée (15) dudit dispositif de positionnement et de blocage (1), lorsque ledit élément de butée (15) est en position opérationnelle;
E) activer ledit dispositif de positionnement et de blocage (1) de manière à ce que la dépression générée par ledit dispositif générateur de dépression (D) atteigne ledit premier conduit (13), à travers ladite première ouverture (101), que lesdits moyens de blocage (111) assument ledit deuxième état et que ledit élément de butée (15) passe de la position de fonctionnement à la position de repos.

9. Procédé selon la revendication précédente, **caractérisé en ce que** l'étape B comprend la sousétape consistant à disposer ledit dispositif de positionnement et de blocage (1) au niveau d'un trou (F) de ladite table de travail (WT), ledit trou (F) étant relié audit dispositif générateur de dépression (D) .

10. Procédé selon la revendication 8 ou 9, **caractérisé en ce que** l'étape E comprend la sousétape suivante:
- exercer une pression sur ladite tête (11) à travers ladite pièce (P) de manière à ce que le clapet anti-retour (112), disposé sur la tête (11) du dispositif de positionnement et de blocage (1) permette le passage d'un fluide dudit premier conduit (13) vers ledit deuxième conduit (14) et/ou dudit premier conduit (13) vers le milieu extérieur.

11. Machine-outil (M) pour l'usinage d'une pièce (P), comprenant
- un socle (B),
- une table de travail (WT) pour supporter ladite pièce (P), disposée sur ledit socle (B),
- un dispositif de génération de dépression (D),
- une unité de travail (UL) pour travailler ladite pièce (P), mobile par rapport à ladite table de travail (WT) selon un premier axe (X), où ladite unité de travail (UL) comprend une tête opérationnelle, où ladite tête opérationnelle est mobile selon un deuxième axe (Y), perpendiculaire audit premier axe (X), et selon un troisième axe (Z), perpendiculaire audit premier axe (X) et audit deuxième axe (Y), **caractérisée en ce que** ladite machine-outil (M) comprend un dispositif de positionnement et de blocage selon l'une quelconque des revendications 1 - 7.

12. Machine-outil (M) selon la revendication précédente, **caractérisée en ce que** ladite table de travail (WT) comprend au moins un trou (F), et **en ce que** ledit dispositif générateur de dépression (D) est relié audit au moins un trou (F).
